Europäisches Patentamt

European Patent Office

Office européen des brevets

(11) Numéro de publication: **0 268 511 B1**

# FASCICULE DE BREVET EUROPEEN

(45) Date de publication de fascicule du brevet: **22.07.92** (51) Int. Cl.⁵: **F16L 37/08**

(21) Numéro de dépôt: **87402367.4**

(22) Date de dépôt: **21.10.87**

(54) **Dispositif de raccordement, à connexion et déconnexion rapides, de conduites tubulaires.**

(30) Priorité: **22.10.86 FR 8614658**

(43) Date de publication de la demande:
**25.05.88 Bulletin 88/21**

(45) Mention de la délivrance du brevet:
**22.07.92 Bulletin 92/30**

(84) Etats contractants désignés:
**AT BE CH DE ES GB GR IT LI LU NL SE**

(56) Documents cités:
**DE-A- 3 410 360**
**GB-A- 2 166 508**
**US-A- 2 111 956**
**US-A- 2 702 202**
**US-A- 3 534 776**

(73) Titulaire: **TRINOVA S.A.**
**Avenue du Château RN 322, Z.I. du Vert Galant**
**F-95310 Saint Ouen L'Aumone(FR)**

(72) Inventeur: **Bidault, Jean-Claude**
**10 rue des Grands Champs**
**F-37270 Larcay(FR)**
Inventeur: **Berhault, Michel**
**189 Rue de Cormery**
**F-37170 Saint-Avertin(FR)**

(74) Mandataire: **Leszczynski, André**
**CABINET NONY & CIE. 29 rue Cambacérès**
**F-75008 Paris(FR)**

## Description

La présente invention est relative à un dispositif de raccordement, à connexion et déconnexion rapides, de conduites tubulaires, notamment de conduites tubulaires métalliques utilisables dans différentes applications industrielles, par exemple l'industrie automobile pour la circulation de liquides tels que l'eau, l'huile... etc.

Plus particulièrement l'invention est relative à un dispositif de raccordement du type comportant un élément tubulaire mâle et un raccord femelle comportant un alésage de diamètre correspondant au diamètre intérieur de l'élément tubulaire mâle, prolongé en direction de l'extrémité du raccord par une partie de diamètre correspondant au diamètre extérieur de l'élément tubulaire mâle, une partie cylindrique de diamètre plus important dans laquelle est logé un joint d'étanchéité et une partie tronconique convergeant en direction de l'extrémité du raccord dans laquelle sont logés des moyens de retenue tels qu'un jonc à ressort annulaire ou une piste à billes, aptes à retenir l'élément tubulaire mâle dans le raccord femelle.

De tels dispositifs de raccordement permettent une connexion rapide dans la mesure où il suffit d'enfoncer l'élément tubulaire mâle dans le raccord femelle pour assurer sa retenue. Par contre, la déconnexion est difficile dans la mesure où il est nécessaire d'appliquer des efforts importants pour séparer les éléments.

Un dispositif de ce type est décrit dans US-A-2 702202 et comporte des moyens de retenue sous forme d'une piste à billes repoussée par un ressort qui exerce sur elle une force nécessaire à la réalisation de la connexion. Pour réaliser une déconnexion il est nécessaire d'exercer une force axiale importante suffisante pour supprimer la contrainte de verrouillage exercée par le ressort.

La présente invention se propose de fournir un dispositif de raccordement permettant d'obtenir une déconnexion particulièrement simple et rapide, sans effort axial important, le dispositif selon l'invention offrant en outre une excellente étanchéité vis-à-vis des pollutions extérieures, notamment des poussières.

Les caractéristiques du dispositif selon l'invention sont exposées dans la revendication 1.

Dans un premier mode de réalisation, le manchon extérieur est monté prisonnier sur l'élément tubulaire mâle. Dans une première variante de ce mode de réalisation, l'organe élastiquement déformable du manchon est un joint annulaire logé en saillie vers l'intérieur d'une gorge ménagée au voisinage de l'extrémité du raccord femelle.

Dans une seconde variante de réalisation, l'organe élastiquement déformable est un soufflet tubulaire solidaire du manchon, venant en appui, en position de connexion, contre l'extrémité du raccord femelle et susceptible d'être écrasé contre ladite extrémité lors de l'enfoncement du manchon dans le raccord femelle pour l'opération de déconnexion.

On comprend en outre que dans ce premier mode de réalisation, aussi bien dans la première variante que dans la seconde, le manchon et l'organe élastiquement déformable assurent une fonction d'étanchéité supplémentaire vis-à-vis d'impuretés extérieures.

Dans ce premier mode de réalisation de l'invention, le manchon peut être monté prisonnier sur l'élément tubulaire mâle par tout moyen approprié, par exemple grâce à un bourrelet faisant saillie de la surface extérieure de l'élément tubulaire mâle, l'extrémité arrière du manchon étant déformée par sertissage contre l'élément tubulaire mâle. Le retrait du manchon est avantageusement limité par un décrochement réalisé dans la paroi intérieure de celui-ci venant buter contre le bourrelet de l'élément tubulaire mâle.

Un marquage sur l'élément tubulaire mâle peut être prévu dans un rôle de détrompage pour matérialiser la position de retrait maximal du manchon par rapport à cet élément tubulaire mâle.

Le bourrelet sur l'élément tubulaire mâle peut être réalisé par déformation vers l'extérieur de sa paroi ou par un jonc annulaire logé dans une gorge prévue à la périphérie de cet élément tubulaire mâle.

Dans un second mode de réalisation de l'invention, le manchon est monté prisonnier du raccord femelle, le manchon comportant une partie d'extrémité recourbée apte à s'engager dans le raccord femelle, l'organe élastiquement déformable étant avantageusement un organe élastique tel un ressort hélicoïdal logé dans le manchon autour de sa partie d'extrémité recourbée et en appui axial contre l'extrémité du raccord femelle.

Outre les avantages décrits en référence au mode de réalisation précédent, le dispositif de raccordement selon ce second mode de rélisation offre l'avantage supplémentaire de ne nécessiter aucune opération particulière d'usinage sur l'élément tubulaire mâle.

Dans le but de mieux faire comprendre l'invention, on va maintenant décrire différents modes de réalisation en se référant au dessin annexé dans lequel :

- la figure 1 est une vue fragmentaire partiellement en coupe d'un dispositif de raccordement selon une première forme de réalisation en position de connexion ;
- la figure 2 illustre le dispositif de la figure 1 dans sa position avant assemblage ;
- la figure 3 illustre le dispositif de la figure 1 lors de la phase de déconnexion ;

- la figure 4 est une vue analogue à la figure 1 d'une seconde forme de réalisation de dispositif de raccordement selon l'invention ;
- la figure 5 illustre le dispositif de la figure 4 avant connexion ;
- la figure 6 illustre le dispositif de la figure 4 lors de la phase de déconnexion ;
- la figure 7 illustre une variante de montage utilisable dans les formes de réalisation précédentes du manchon sur l'élément tubulaire mâle ; et
- la figure 8 est une vue partiellement en coupe d'un dispositif selon l'invention selon une troisième forme de réalisation.

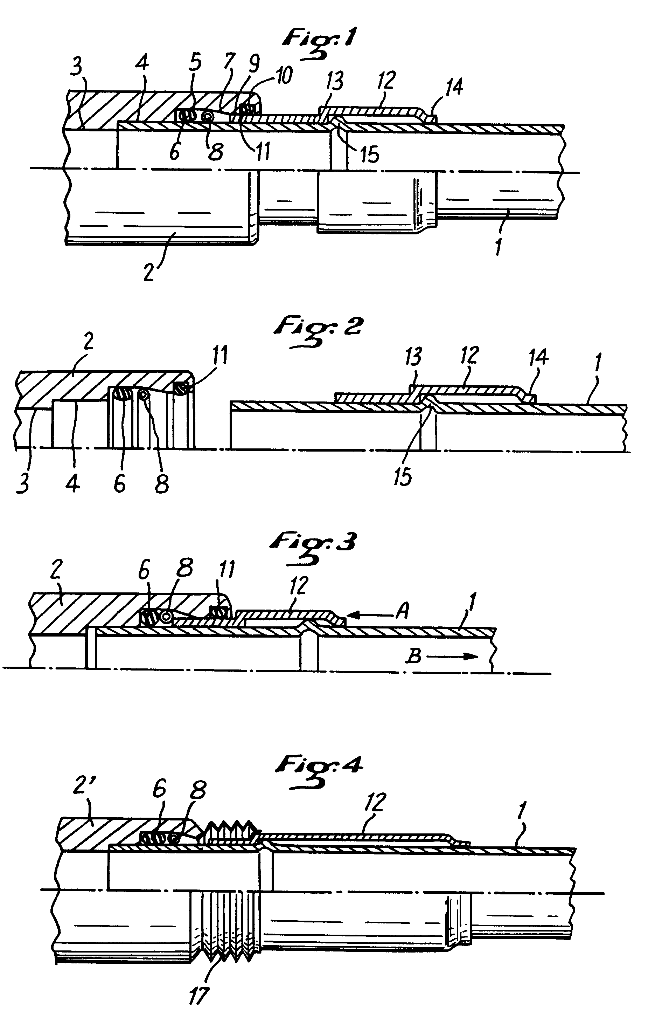

On se réfère tout d'abord aux figures 1 à 3.

On y voit un élément tubulaire mâle désigné globalement par 1 dont la connexion doit être réalisée à un raccord femelle 2.

Ce raccord femelle comporte un alésage 3 de diamètre correspondant au diamètre interne de l'élément tubulaire 1 prolongé par une portée cylindrique 4 logeant en position de connexion (figure 1) l'extémité de l'élément tubulaire mâle, cette portée étant elle-même prolongée par une portée cylindrique de plus grand diamètre 5 logeant unt joint d'étanchéité 6 et une portée tronconique 7 logeant un jonc à ressort 8.

La portée tronconique 7 convergente vers l'extérieur est prolongée vers l'extrémité du raccord 2 par une portée cylindrique 9 dans une gorge 10 de laquelle est logé en saillie un joint annulaire 11.

Selon l'invention il est prévu un manchon de déconnexion 12 monté prisonnier sur l'élément tubulaire mâle en comportant à cet effet un décrochement 13 et une partie arrière déformée par sertissage 14 limitant le déplacement du manchon 12 contre un bourrelet en saillie 15 réalisé, dans ce mode de réalisation, par déformation de la paroi de l'élément tubulaire mâle 1.

Dans la variante de réalisation de la figure 7, le déplacement du manchon 12 est limité par rapport à un joint annulaire 16 logé dans une gorge prévue à la périphérie de l'élément tubulaire mâle 1.

Pour réaliser la connexion rapide du dispositif s elon l'invention, il suffit à partir de la position illustrée à la figure 2 d'enfoncer l'élément tubulaire mâle 1 à l'intérieur du raccord jusqu'à ce que son extrémité vienne buter contre le décrochement réalisé entre les portées 3 et 4 de l'alésage du raccord. La retenue de l'élément tubulaire mâle 1 est assurée par le jonc à ressort 8.

Le joint 11 limite, comme on le voit sur la figure 1, la pénétration du manchon 12 et assure en outre une fonction supplémentaire d'étanchéité.

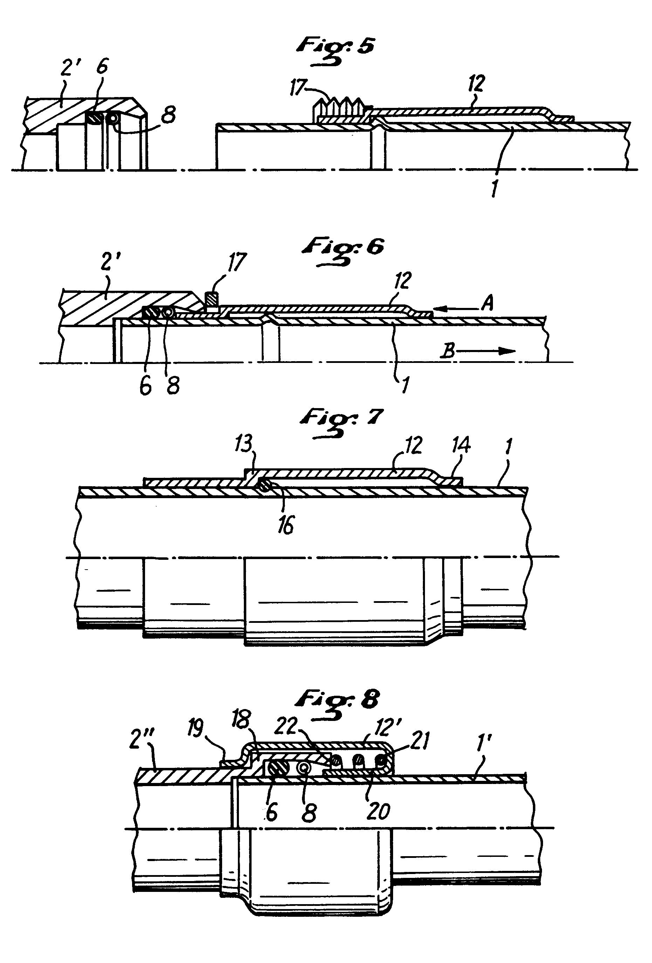

Pour réaliser la déconnexion, il suffit comme illusté sur la figure 3, de repousser en direction du raccord 2 le manchon 12 dans le sens matérialisé par la flèche A, ce qui repousse le jonc à ressort 8 vers le joint d'étanchéité 6.

Il suffit alors d'exercer une traction sur l'élément tubulaire mâle 1 dans le sens de la flèche B pour réaliser la déconnexion.

Aucune pièce essentielle du raccord n'étant endommagée lors des opérations de connexion et de déconnexion, le dispositif de raccordement selon l'invention est parfaitement réutilisable. En cas de nécessité. il est bien entendu possible de remplacer aisément les composants détériorés, notamment les joints d'étanchéité.

Le dispositif de raccordement selon les figures 4 à 6 se distingue uniquement de celui du mode de réalisation des figures 1 à 3 par le fait que le raccord femelle 2′ ne comporte plus de gorge 10 logeant un joint d'étanchéité et que la fonction de limitation de l'avance du manchon 12 est assurée par un soufflet 17 solidaire de l'extrémité du manchon 12. Ce soufflet, dans la position de connexion illustrée à la figure 4, vient en appui contre l'extrémité du raccord femelle 2′ est est susceptible d'être écrasé, comme on le voit dans la figure 6, lorsque le manchon 12 est repoussé dans le sens de la flèche A en vue de réaliser la déconnexion. Celle-ci s'effectue de la même manière que dans le mode de réalisation précédent en exerçant ensuite une traction dans le sens matérialisé par la flèche B sur l'élément tubulaire mâle 1.

Dans ce mode de réalisation, le montage du manchon prisonnier de l'élément tubulaire mâle 1 peut être réalisé également de la manière illustrée à la figure 7.

Dans le mode de réalisation de la figure 8, l'élément tubulaire mâle 1′ diffère de l'élément tubulaire mâle 1 des modes de réalisation précédents par le fait qu'il n'a subi aucune préparation particulière.

Le raccord femelle 2″ présente par contre un décrochement au niveau de sa paroi extérieure en 18 et le manchon de déconnexion 12′ est monté prisonnier de raccord femelle en présentant une extrémité repliée par sertissage 19 et une partie d'extrémité recourbée 20 susceptible de s'engager à l'intérieur du raccord femelle le long de l'élément tubulaire mâle 1′.

La limitation de la pénétration de l'extrémité recourbée 20 du manchon à l'intérieur du raccord femelle lors de la connexion est assurée par un ressort hélicoïdal 21 en appui contre l'extrémité 22 du raccord. Pour la déconnexion, il suffit comme dans les modes de réalisation précédents, de faire coulisser le manchon 12′ (vers la gauche sur la figure 8) jusqu'à repousser le jonc à ressort 8 et permettre l'extraction par traction de l'élément tubulaire mâle 1′.

Dans les différents modes de réalisation de l'invention, il est possible de prévoir une bague, par exemple en PTFE (non repreésentée) entre le joint d'étanchéité 6 et le jonc à ressort 8. Cette bague a pour effet d'éviter, en vieillissement, une dégradation du joint d'étanchéité.

**Revendications**

1. Dispositif de raccordement, à connexion et déconnexion rapides, de conduites tubulaires, comportant un élément tubulaire mâle et un raccord femelle présentant un alésage de diamètre correspondant au diamètre intérieur de l'élément tubulaire mâle, prolongé en direction de l'extrémité du raccord par une partie de diamètre correspondant au diamètre extérieur de l'élément tubulaire mâle, une partie cylindrique de diamètre plus important dans laquelle est logé un joint d'étanchéité et une partie tronconique convergeant en direction de l'extrémité du raccord et dans laquelle sont logés des moyens de retenue aptes à retenir l'élément tubulaire mâle dans le raccord, un manchon tubulaire extérieur (12, 12') monté prisonnier sur l'élément tubulaire mâle (1) ou le raccord femelle (2"), susceptible de coulisser le long de l'élément tubulaire mâle et comportant une partie d'extrémité susceptible de s'engager dans le raccord femelle (2, 2', 2") et un organe élastiquement déformable (11, 17, 21) disposé de manière à offrir une résistance à l'avancement du manchon (12, 12') lors de la connexion, mais susceptible d'être déformé élastiquement lors d'un déplacement ultérieur du manchon sous l'effet d'une force d'appui axiale prédéterminée, de manière à permettre audit manchon d'atteindre et de repousser, en vue de la déconnexion, les moyens de retenue dans la partie cylindrique de plus grand diamètre (5) de l'alésage du raccord, ce qui permet de déconnecter ensuite par simple traction axiale l'élément tubulaire mâle du raccord femelle, caractérisé par le fait que lesdits moyens de retenue comportent un jonc à ressort annulaire (8) placé dans ladite partie tronconique convergeant en direction de l'extrémité du raccord, que pour la déconnexion, le manchon (12, 12') repousse le jonc à ressort annulaire (8) dans la partie cylindrique de diamètre plus important (5) de l'alésage du raccord, et que ledit organe élastiquement déformable (11, 17, 21) est disposé de manière à offrir une résistance à l'avancement dudit manchon (12, 12') seulement sans influencer ledit jonc à ressort annulaire (8).

2. Dispositif de raccordement selon la revendication 1, caractérisé par le fait que le manchon extérieur (12) est monté prisonnier sur l'élément tubulaire mâle (1).

3. Dispositif de raccordement selon la revendication 2, caractérisé par le fait que l'élément tubulaire mâle présente un bourrelet (15, 16) faisant saillie de sa surface extérieure, le manchon étant déplaçable de part et d'autre dudit bourrelet entre des positions délimitées par son extrémité arrière (14) déformée par sertissage contre l'élément tubulaire mâle et un décrochement (13) réalisé dans sa paroi intérieure.

4. Dispositif de raccordement selon la revendication 3, caractérisé par le fait que ledit bourrelet est réalisé par déformation vers l'extérieur (15) de la paroi de l'élément tubulaire mâle.

5. Dispositif de raccordement selon la revendication 3, caractérisé par le fait que ledit bourrelet est réalisé par un jonc annulaire (16) logé dans une gorge prévue à la périphérie de l'élément tubulaire mâle.

6. Dispositif de raccordement selon l'une quelconque des revendications précédentes, caractérisé par le fait que l'organe élastiquement déformable est un joint annulaire (11) logé en saillie vers l'intérieur d'une gorge (10) ménagée au voisinage de l'extrémité du raccord femelle (2).

7. Dispositif de raccordement selon l'une quelconque des revendications 1 à 5, caractérisé par le fait que l'organe élastiquement déformable est un soufflet tubulaire (17) solidaire du manchon (12), venant en appui, en position de connexion contre l'extrémité du raccord femelle (2') et susceptible d'être écrasé contre ladite extrémité lors de l'enfoncement du manchon dans le raccord femelle pour l'opération de déconnexion.

8. Dispositif de raccordement selon la revendication 1, caractérisé par le fait que le manchon (12') est monté prisonnier du raccord femelle (2").

9. Dispositif de raccordement selon la revendication 8, caractérisé par le fait que ledit manchon (12') comporte une partie d'extrémité recourbée (20) apte à s'engager dans le raccord femelle, l'organe élastiquement déformable étant un organe élastique tel qu'un ressort hélicoïdal (21) logé dans le manchon autour de sa partie d'extrémité recourbée et en appui axial contre l'extrémité (22) du raccord femelle.

**Claims**

1. Junction device with rapid connection and disconnection for tubular pipelines, comprising a male tubular element and a female coupling having a bore of a diameter corresponding to the inside diameter of the male tubular element and extended towards the end of the coupling by a part of a diameter corresponding to the outside diameter of the male tubular element, a cylindrical part of larger diameter, in which a sealing gasket is seated, and a frustoconical part which converges towards the end of the coupling and in which are seated retention means capable of retaining the male tubular element in the coupling, an outer tubular sleeve (12, 12') which is mounted captively on the male tubular element (1) or the female coupling (2'') and is slidable along the male tubular element and which has an end part capable of engaging into the female coupling (2, 2', 2'') and an elastically deformable member (11, 17, 21) arranged in such a way as to offer resistance to the advance of the sleeve (12, 12') during connection, but capable of being deformed elastically during a subsequent movement of the sleeve under the effect of a predetermined axial bearing force, so as to allow the said sleeve to reach and push back, for the purpose of disconnection, the retention means in the cylindrical part of larger diameter (5) of the bore of the coupling, thus making it possible subsequently to disconnect the male tubular element from the female coupling as a result of a simple axial pull, characterised in that the said retention means comprise an annular spring ring (8) placed in the said frustoconical part which converges towards the end of the coupling, in that, for disconnection, the sleeve (12, 12') pushes back the annular spring ring (8) in the cylindrical part Of larger diameter (5) of the bore of the coupling, and in that the said elastically deformable member (11, 17, 21) is arranged in such a way as to offer resistance to the advance of the said sleeve (12, 12') only, without influencing the said annular spring ring (8).

2. Junction device according to Claim 1, characterised in that the outer sleeve (12) is mounted captively on the male tubular element (1).

3. Junction device according to Claim 2, characterised in that the male tubular element has a bead (15, 16) projecting from its outer surface, the sleeve being movable on either side of the said bead between positions delimited by its rear end (14) deformed as a result of crimping against the male tubular element and by an offset (13) formed in its inner wall.

4. Junction device according to Claim 3, characterised in that the said bead is made as a result of the outward deformation (15) of the wall of the male tubular element.

5. Junction device according to Claim 3, characterised in that the said bead is formed by an annular ring (16) seated in a groove made on the periphery of the male tubular element.

6. Junction device according to any one of the preceding claims, characterised in that the elastically deformable member is an annular gasket (11) seated so as to project towards the inside of a groove (10) made near the end of the female coupling (2).

7. Junction device according to any one of Claims 1 to 5, characterised in that the elastically deformable member is a tubular concertina (17) which is fixed to the sleeve (12) and, in the connection position, comes to bear against the end of the female coupling (2') and which is capable of being compressed against the said end during the insertion of the sleeve into the female coupling for the disconnection operation.

8. Junction device according to Claim 1, characterised in that the sleeve (12') is mounted captively on the female coupling (2'').

9. Junction device according to Claim 8, characterised in that the said sleeve (12') has a curved end part (20) designed to engage into the female coupling, the elastically deformable member being an elastic member, such as a helical spring (21), seated in the sleeve round its curved end part and bearing axially against the end (22) of the female coupling.

**Patentansprüche**

1. Kupplungsvorrichtung zum schnellen Verbinden und Trennen von Rohrleitungen, mit einem Steckrohr und einer Steckhülse einschl. einer Bohrung, deren Durchmesser dem inneren Durchmesser des Steckrohres entspricht und die in Richtung auf das Steckhülsenende mit Hilfe eines Abschnittes, dessen Durchmesser dem äußeren Durchmesser des Steckrohres entspricht, mit Hilfe eines zylindrischen Abschnittes mit einem wichtigeren Durchmesser, in dem eine Dichtung angeordnet ist, und mit Hilfe eines konischen Abschnittes verlängert ist, der sich in Richtung des Steckhülsenendes verjüngt und in dem Haltemittel angeordnet sind, die zum Festhalten des Steckrohres in der Steckhülse dienen, einer rohrförmigen äußeren Manschette (12, 12'), die unverlierbar auf dem Steckrohr (1) oder der Steckhülse (2, 2'') angebracht ist, entlang dem Steckrohr verschieblich angeordnet ist und einen Endabschnitt trägt, der in die Steckhülse (2, 2', 2'') eingreift, sowie mit einem elastisch deformierbaren Element (11, 17, 21), das so angeordnet ist, daß es bei der Annäherung der Manschette (12, 12') während der Verbindung einen Widerstand bietet, jedoch während einer weiteren Fortbewegung der Manschette unter der Wirkung einer axialen, vorgegebenen Druckkraft elastisch deformierbar ist, dergestalt, daß der Manschette bei einem Trennungsvorgang das Erreichen und Zurückschieben der Haltemittel in den zylindrischen Abschnitt des größeren Durchmessers (5) der Bohrung der Steckhülse gestattet wird, was die nachfolgende Trennung durch einfaches axiales Ziehen des Steckrohres aus der Steckhülse gestattet, dadurch **gekennzeichnet,** daß die Haltemittel einen Federring (8) umfassen, der in dem konischen, sich in Richtung auf das Steckschlüsselende verjüngenden Abschnitt angeordnet ist, daß für das Trennen die Manschette (12, 12') den Federring (8) in den zylindrischen Abschnitt des wichtigeren Durchmessers (5) der Bohrung der Steckhülse zurückdrückt, und daß das elastisch deformierbare Element (11, 17, 21) so angeordnet ist, daß es lediglich bei dem Vorschieben der Manschette (12, 12') einen Widerstand bietet, ohne den Federring (8) zu beeinflussen.

2. Kupplungsvorrichtung nach Anspruch 1, dadurch **gekennzeichnet,** daß die äußere Manschette (12) unverlierbar auf dem Steckrohr (1) angebracht ist.

3. Kupplungsvorrichtung nach Anspruch 2, dadurch **gekennzeichnet,** daß das Steckrohr einen Vorsprung (15, 16) aufweist, der sich von seiner äußeren Oberfläche abhebt, wobei die Manschette zu beiden Seiten des Vorsprungs zwischen den Positionen verschiebbar ist, die durch ihr hinteres Ende (14), das durch eine Einschnürung gegen das Steckrohr deformiert ist, und eine Stufe (13) festgelegt sind, die in ihrer inneren Wandung vorgesehen ist.

4. Kupplungsvorrichtung nach Anspruch 3, dadurch **gekennzeichnet,** daß der Vorsprung durch eine Deformation (15) der Wandung des Steckrohrs nach außen gebildet ist.

5. Kupplungsvorrichtung nach Anspruch 3, dadurch **gekennzeichnet,** daß der Vorsprung durch einen Sicherungsring (16) gebildet ist, der in einer Nut liegt, die am Umfang des Steckrohres vorgesehen ist.

6. Kupplungsvorrichtung nach einem der vorhergehenden Ansprüche, dadurch **gekennzeichnet,** daß das elastisch deformierbare Element eine Ringdichtung (11) ist, die nach innen vorspringend in einer Nut (10) untergebracht ist, die nahe an dem Ende der Steckhülse (2) liegt.

7. Kupplungsvorrichtung nach einem der Ansprüche 1 bis 5, dadurch **gekennzeichnet,** daß das elastisch deformierbare Element ein rohrförmiger Balg (17) ist, der an der Manschette (12) angebracht ist, in der Verbindungsposition gegen das Ende der Steckhülse (2') zur Anlage kommt und während des Eindrückens der Manschette in die Steckhülse für den Trennvorgang gegen dieses Ende zusammengedrückt wird.

8. Kupplungsvorrichtung nach Anspruch 1, dadurch **gekennzeichnet,** daß die äußere Manschette (12') unverlierbar auf der Steckhülse (2'') angeordnet ist.

9. Kupplungsvorrichtung nach Anspruch 8, dadurch **gekennzeichnet,** daß die Manschette (12') einen zurückgefalteten Endabschnitt (20) trägt, der in die Steckhülse eingreifen kann, wobei das elastisch deformierbare Element ein elastisches Element wie z.B. eine Schraubenfeder (21) ist, das in der Manschette um den zurückgefalteten Endabschnitt herumgelegt ist und axial an dem Ende (22) der Steckhülse anliegt.

*Fig. 1*

*Fig. 2*

*Fig. 3*

*Fig. 4*

Fig. 5

Fig. 6

Fig. 7

Fig. 8